# EUROPEAN PATENT APPLICATION

(11) **EP 4 682 814 A1**
(43) Date of publication of application: **21.01.2026**
(21) Application number: 24189515.0
(22) Date of filing: 18.07.2024
(51) Int. Cl.: G06T 1/20, G09G 5/14, G09G 5/393

(54) **FPGA WITH 2D GRAPHICAL PROCESSING UNIT**

(71) Applicant: EVS Broadcast Equipment SA, 4102 Seraing (BE)
(72) Inventor: Spanjers, Jasper, 5237PH Den Bosch (NL)
(74) Representative: Rossmanith, Manfred

(57) **Abstract**

An FPGA for video processing including a graphical processing unit. The FPGA comprises an interface (206) for receiving drawing commands, a VRAM (207) for storing video data, a shader device (301) configured to load a software applet into a working memory for executing the drawing commands. The shader device generates graphical elements that are written into the VRAM. The FPGA further comprises an output (303) for providing a composed video output signal including at least one video stream and at least one graphical element associated with the video stream(s). The FPGA can be implemented in a video processing device, such as a multiviewer system.

## Description

### Field

The present disclosure relates to a Field Programmable Gate Array (FPGA) for video processing including a graphical processing unit and to a video processing device, in particular a multiviewer system comprising such an FPGA.

### Background

For the transition media broadcasting equipment to purely IP-based broadcast equipment, operators and broadcasting companies need equipment for implementing the transition between classical broadcast equipment utilizing traditional baseband media and IP-based broadcast equipment.

For the transition to purely native IP infrastructures, broadcasters and media organizations need efficient media processing tools to bridge the gap between traditional baseband media and modern IP environments. Commercially available network attached processor (NAP) devices such as Neuron ^{®} from EVS Broadcast SA offer IP video, audio, and data processing for both current and future broadcast operations. Designed around IP technology, NAP devices have the power to process up to 64 HD channels or 16 UHD channels delivered via true 100G Ethernet and optional SDI connectivity. NAP devices offer various applications including bridge, convert, protect, compress, shuffle, and view of the received channels to meet infrastructure processing requirements. In other words, by loading different kind of software it is possible to configure a hardware platform to perform different types of processing.

Operators/users in a broadcast studio for news or sports productions utilize multiviewers to monitor multiple video and audio streams at the same time for improved usability and ease of operation of their live production workflows. Flexibility on the layout of the multiviewer and low latency are aspects that are important for the users.

When operating as a multiviewer, the NAP device needs to be able to execute graphics functions such as to display audio meters, to move graphics elements by bit blitter operations, and to draw bordered boxes to name some examples. To this end, a graphic processing unit (GPU) is provided in the NAP device that interfaces with the software application that configures the NAP device as a multiviewer. For achieving smooth graphics, the GPU must be able to display e.g. 8 audio meters and adapt the display for every frame. Furthermore, execution of graphic processing should not be done at the expense of a CPU in the NAP device executing the software that implements the multiviewer functionality.

Existing GPUs are typically hard coded on an FPGA, i.e. their functionality is fixed and not flexible. The GPU is defined using a hardware description language and translated into a configuration file by generator software, which specifies how the physical elements in the FPGA are to be connected. In this sense a hardcoded GPU defines the desired circuit structure of the FPGA. This is also referred to as the configuration of the FPGA. In consequence, conventional GPUs can process only predefined input commands and data to produce a predefined graphical output. This type of fixed function GPU consumes FPGA resources and is for that reason normally not scalable because the FPGA resources are limited and are needed to perform processing steps on the incoming video streams. For the sake of clarity is noted that for the GPU it does not matter if an SDI-only processing multiviewer or IP-based multiviewer is used.

In view of the limitations of existing GPUs on FPGAs, there remains a desire for an FPGA to overcome or at least improve one or more of the problems mentioned at the outset.

### Summary

According to a first aspect the present disclosure suggests FPGA for video processing including a graphical processing unit. The FPGA comprises an interface for receiving drawing commands, a VRAM for storing video data, a shader device configured to load a software applet into a working memory for executing the drawing commands. The shader device generates graphical elements that are written into the VRAM. The FPGA further comprises an output for providing an output signal including at least one graphical element.

In an advantageous embodiment the FPGA is configured to additionally provide at the output at least one video stream, wherein the at least one graphical element associated with the video stream(s). In video production, many times it is necessary to process incoming video streams provided by cameras or video recorders, for instance converting the video stream from one format to another one. For this task the performance of FPGAs is superior to software programmable CPUs. In contrast to conventional FPGAs, the FPGA according to the present disclosure implements a GPU, the functionality of which is defined by small software programs called an applet. Hence the proposed FPGA implements a non-fixed function hardware accelerated GPU.

By loading different applets into a working memory of the shader device unparalleled flexibility can be achieved without consuming a lot of FPGA resources in comparison to dedicated fixed function GPUs used in conventional FPGA products.

In an advantageous embodiment the shader device is configured to load several applets at the same time into the working memory, wherein the applets execute different drawing commands.

In other words, the shader device is configurable to execute different drawing commands such as a pixel editor given location on the screen in a given color, a given frame rate, etc. By loading other applets, the shader device can execute other drawing commands and generate other graphical elements. In contrast to conventional FPGAs this flexibility is achieved without occupying FPGA resources for a multitude of GPUs that are dedicated to executing an individual drawing command.

Advantageously, the FPGA is configured to operate at a clock rate that permits to execute applets many times within the duration of a single video frame.

In a practical embodiment the FPGA according to the present disclosure operates at the clock rate of 300 MHz and can draw for instance audio bars for up to 16 video streams that are displayed on a multiviewer display device. The applet needed to draw an audio bar puts one pixel in a predefined color at a predefined location on the screen. The audio bar is built by repeating the applet and composing the audio bar pixel by pixel. Every audio bar is drawn completely per frame per applet call. If, for instance, there are 16 audio bars to be drawn, the applet is executed 16 times per frame

In a further embodiment the shader device is configured to generate a graphical output at the drawing rate that is equal to or lower than a frame rate of a video stream associated with the graphical output.

When the drawing rate is smaller than the video frame rate, the GPU of the FPGA has more time to generate the graphical elements. For example, the drawing rate could be 25 Hz while the video frame rate is 50 Hz. Thus, the GPU has the duration of two video frames time for generating the graphical elements.

With advantage the shader device comprises an execution unit and a scratch pad memory.

In this case it has been found useful when the execution unit is coupled with an applet memory storing multiple applets.

Advantageously, the applet memory is configured to delete previously loaded applets and store new applets.

The possibility to delete applets which are no longer needed and replace them with new applets contributes to the flexibility of the FPGA according to the present disclosure, and more specifically of the GPU included in the FPGA. No change in the hardware is needed to provide for new graphical capabilities.

In a further embodiment the execution unit receives drawing instructions containing a start address and arguments for a specific applet stored in the applet memory.

With advantage, the scratch pad memory of the shader device reads from and writes to the VRAM to compensate latencies of the VRAM.

According to a second aspect, the present disclosure proposes a video processing device comprising an FPGA according to the first aspect of the present disclosure.

According to a third aspect, the present disclosure proposes a multiviewer system comprising a video processing device according to the second aspect of the present disclosure. The processing device is communicatively connected with a monitor, and the processing device is configured to receive multiple input video streams and to execute an application for generating a composed output video signal including at least several input video streams displayed on the monitor. The FPGA produces graphical output which is integrated in the composed output video signal.

The FPGA according to the present disclosure can advantageously be implemented in any kind of video processing device. However, in the multiviewer system the flexibility offered by the FPGA is particularly relevant because the GPU integrated in the FPGA is sufficiently powerful to generate graphical output for a multitude of video streams displayed by the multiviewer system.

Neuron View ^{®} is a commercially available multiviewer system, which can support two UHD outputs or up to eight full HD outputs in a fully customizable layout. The multiviewer supports all the essential functionalities needed in demanding live production environments, including multiple tallies and static or dynamic under-monitor-displays (UMD) per picture, Precision Time Protocol (PTP) or countdown clocks, and various audio bars to indicate audio activity. Configuration of these features can be done using a dedicated API or the multiviewer's web interface.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a schematic layout of multiviewer monitors of a multiviewer system;
- Fig. 2: in a high-level architecture of a portion of the multiviewer system generating graphics in an FPGA according to the present disclosure;
- Fig. 3A: a schematic block diagram of the GPU;
- Fig. 3B: a canvas with multiple graphical elements;
- Fig. 4: a detailed block diagram of a shader device included in the FPGA according to the present disclosure; and
- Fig. 5: a high-level block diagram of a portion of the FPGA.

### Detailed description

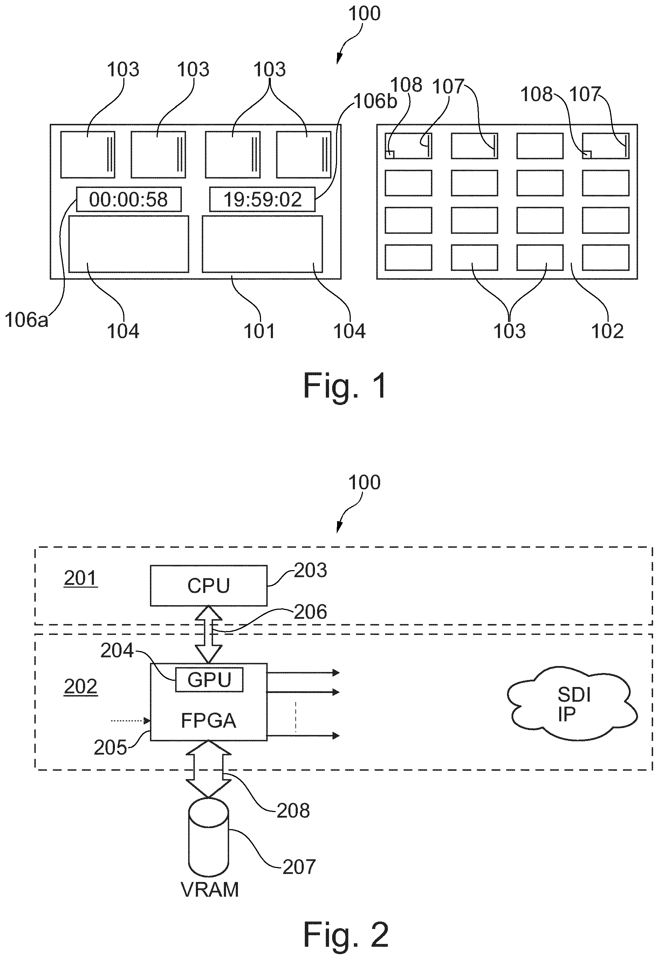

Figure 1 illustrates an exemplary layout of a visual output of a multiviewer system 100 with two monitors 101, 102. In other embodiments of the multiviewer system 100 only one or more than two monitors may be employed. Monitor 101 displays four input media streams in windows 103 in the upper portion of the monitor 101 and two composed input media streams in windows 104 in the lower portion of the monitor 101. The input media streams are for instance camera streams, recorded video streams, or output streams of a video mixer (not shown). In addition to that, monitor 101 presents two time displays 106a, 106b in a center area. Time display 106a may count down the time when a broadcast program starts and time display 106b may indicate the local time in the studio. Monitor 102 displays 16 video streams in individual windows 103. In addition to the image contents of the displayed video stream, each window 103 and/or 104 additionally shows one or several audio bars 107 and a tally light 108 associated with the respective media stream as an option. The audio bars 107 and the tally lights 108 are inserted as graphical elements into the image of the respective media stream and are not part of the incoming video streams. The insertion of the graphical elements is performed by a graphical processing unit (GPU) as it will be described further below.

For the sake of simplicity, the following description is limited to audio bars as an example for inserted graphical elements. It is noted that the present disclosure is not limited to audio bars but can be applied to any graphical object.

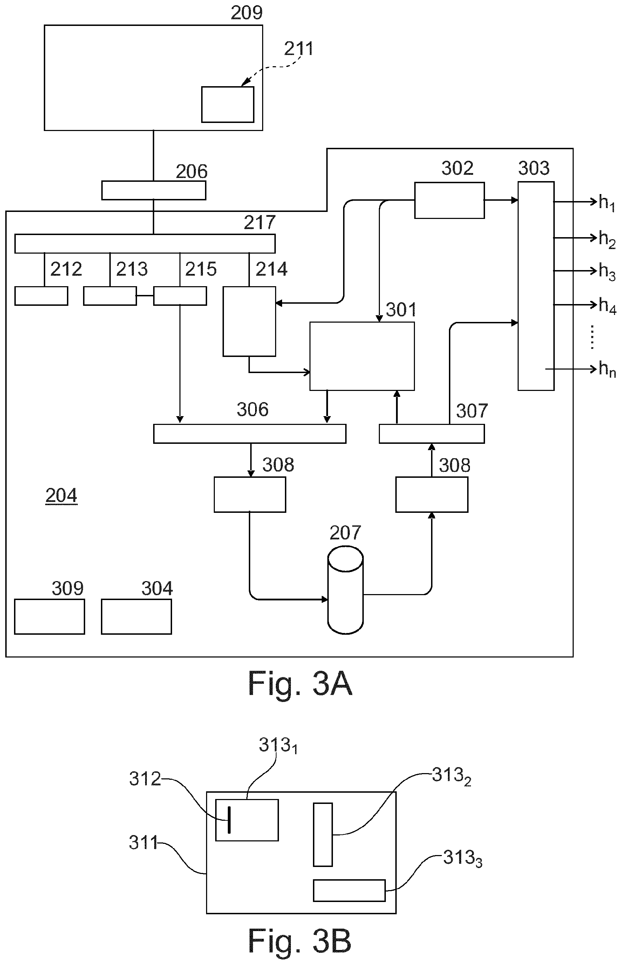

Figure 2 shows a portion of a high-level architecture of the multiviewer system 100 that creates the visual output shown in Figure 1. The architecture of the multiviewer system 100 comprises a software level 201 and an FPGA level 202. The software level 201 includes application software and display drivers required to display user selectable video streams on monitors 101, 102. In a practical embodiment the multiviewer system 100 can handle 32 HD or 8 UHD video streams. The software is running on a central processing unit CPU 203 and controls the input video streams and the monitors 101, 102 to display each selected input media stream in a window 103, 104. To this end, the multiviewer system 100 is provided with a user interface (not shown) enabling the user to select video streams and the size of the window 103, 104 for each selected video stream. In many cases the input video streams are accompanied by one or several audio streams. Therefore, it is useful to display in the windows on the monitors of the multiviewer system 100 audio bars symbolizing the volume of the audio streams accompanying a video stream. Further useful graphical elements may be displayed as well, for instance a tally light 108. The software level 201 issues drawing commands to a graphical processing unit (GPU) 204 implemented on an FPGA 205, which is located on an FPGA level 202 of the system 100. Timewise, the software runs ahead of a currently displayed video frame and generates all drawing commands required for future video frames. Specifically, when video frame N is currently on display, the software calculates drawing commands for video frame N+1 or N+2 for instance. The drawing commands are stored in a dispatcher 214 (Fig. 3) and the GPU 204, which resides in the FPGA 205, plays out the graphics related to the drawing commands frame by frame in a synchronized fashion.

The software level 201 communicates with the FPGA level 202 via a bidirectional bus 206 connecting the CPU 203 with the GPU 204 and FPGA 205, respectively. More specifically, the drawing commands are generated by a GPU driver 211 (Fig. 3) on the software level 201 and are derived from higher level drawing entities associated with an application 209 running on the CPU 203. For example, a high-level drawing command like "triangle" is converted by the GPU driver 211 into three "line" drawing primitives.

The GPU 204 communicates with a video storage VRAM 207 via a bidirectional bus 208 and directly manipulates the contents of the VRAM 207 that has a size of 4GB for example. In one embodiment the bidirectional buses 206, 208 are for instance PCIe buses. Other memory buses can be used in other embodiments. The VRAM 207 can be part of the FPGA 205 or can be an external memory or storage. The present disclosure is agnostic regarding the aspect of how the VRAM 207 is implemented.

Memory section 212 (in short: register 212) represents registers, for instance 20 to 30 registers for configuring the GPU 204. Memory section 213 is a region selector (in short: region selector 213) for selecting memory regions in the VRAM 207. Finally, memory section 214 is reserved for a dispatcher (in short: dispatcher 214), which will be described further below.

Figure 3A shows a schematic block diagram of the GPU 204. An application 209 runs on the CPU 203. The application 209 is for instance a multiviewer application for displaying a plurality of video streams in windows 103 on one or several monitors 101,102 (Figure 1). It is noted that the present disclosure is not limited to a specific kind of application. The application 209 incorporates a GPU driver 211 providing an interface between the application 209 and the GPU 204 to abstract the application 209 from the GPU 204. The PCIe bus 206 achieves a physical communication connection between the application 209 and the GPU 204, which is mapped as an 8MB-device on the PCIe bus. In other embodiments for different use cases the GPU 204 is mapped with different sizes e.g. with 1 MB, 128 MB etc. Only for the sake of conciseness the present description refers to the embodiment in which the GPU 204 is mapped as an 8MB-device on the PCIe bus.

The available 8MB memory is subdivided into four 2MB sections 212-215 of equal size dedicated to different functions. A memory map component 217 directs each command received from the GPU driver 211 according to a memory address contained in the command. The commands are transmitted to one predefined memory section of memory sections 212-215. All commands coming from the software level 201 via the PCIe bus 206 are forwarded to the memory map component 217, which directs each command to the register 212, the region selector 213, the dispatcher 214, and a currently active memory section VRAM 215, which is part of the VRAM 207.

The registers 212 are adapted for configuring the GPU 204. All configuration and status data of the GPU 204 are loaded and subsequently stored until new data are transmitted from the application 209 and GPU driver 211, respectively. The register 212 holds data including data describing width and height of a canvas such as 8k pixels in horizontal and 4k pixels in vertical direction and a background color, for instance.

The region selector 213 enables a write access to one 2MB section of the 4GB VRAM 207 such that the application 209 can directly write into this section of the VRAM 207. In other words, region selector 213 allows the software to directly write into a currently active memory section VRAM 215. Currently active means that data can be written into this memory section. For instance, if the attached monitor has a size of 8k pixels in horizontal and 4k pixels in vertical direction, 16 VRAM memory sections of 2MB size (in total 32MB) are required to store a full screen image/frame. A multiviewer application may write images with reduced resolution into different sections of the VRAM 207.

The dispatcher 214 receives drawing commands from the application 209 and issues them to a shader 301. The dispatcher 214 is the main entry point to initiate creation of graphical elements by a shader 301.

The shader 301 is a programmable processor for drawing graphics by manipulating the contents of the VRAM 207 by means of executing shader applets. The shader 301 is configured to execute numerous applets for every video frame. The applets are small and configurable programs executing drawing commands from the application 209 running on the software level 201. For example, the GPU 204 contains three applets, namely bit blitter for fast copying and shifting of memory contents, a bordered box, and a vertical audio bar. Other applets can be loaded as well.

To achieve a smooth animation of the video frames with the graphical elements, a frame buffer manager 302 is flipping buffers and communicates buffer addresses to different users for supporting single, double, and triple buffering. Single buffering means that the contents of a frame is stored in the buffer and read out when a vertical sync signal Vsync occurs. Double buffering means that a currently displayed frame is contained in a front buffer and a subsequent frame is stored in a back buffer. Triple buffering means that there are one front buffer and two back buffers. The buffers are implemented on the VRAM 207.

The shader 301 generates graphics and writes them in VRAM 207 on any memory address. A heads component 303 outputs heads h₁....hₙ that are read from the VRAM 207 with a specific frame rate and dimension. Thus, the heads h₁....hₙ represent an area on the canvas with one or several graphics elements. Any content in the VRAM 207 can be read and output as heads h₁... hₙ. In principle the number of outputs of the shader 301 is not limited but the number of heads that can be handled by the heads component is limited. In a practical embodiment the heads component 303 outputs 16 heads having a fixed 32-bit or 16-bit RGBA format and which are displayed on top of a canvas shown on the monitors 101, 102. In some practical embodiments more than 16 heads may create routing and timing issues in the FPGA 204. However, in other embodiments the heads component 303 may output more than 16 heads. In any case the present disclosure is not limited to a specific number of heads. RGBA stands for red, green, blue, and alpha and is a three-channel RGB color model supplemented with a fourth alpha channel. The alpha channel indicates how opaque each pixel is and allows an image to be combined over others using alpha compositing, with transparent areas and anti-aliasing of the edges of opaque regions.

Insertion Fig. 3B illustrates the canvas as a frame 311, a graphical element 312 and head h₁ as a frame 313₁. Heads h₂ and h₃ are located at different areas on the canvas and have a different shape as shown by the frames 313₂ and 313₃.

The heads are configured by software and each head can have its own video output dimension and its location on the main graphics canvas. Each head is also able to generate a specific video output timing. The GPU can generate video using the software configured frame rate or can lock to an external reference. A Vsync component 304 provides the required Vsync signal. The composed output signals are provided to other FPGA logic or directly to a video output such as the monitors 101, 102. In a practical embodiment the heads component 303 can output up to 16 heads, which are runtime configurable in terms of location on the canvas, dimension, read-out speed etc. The heads are synchronized with the Vsync signal such that the graphical output is synchronized with the video frames. In order to avoid the negative impact on read latencies the heads are read ahead of a currently displayed frame and stored in a cache memory.

In one embodiment the shader 301 draws at a rate smaller than the display rate of the video frames to give more time for the GPU 204 to generate the graphics. For instance, when the display rate could be 50Hz and the drawing rate 25Hz.

The region selector 213 and the shader 301 can send write commands to the VRAM 207. The shader 301 has priority over the region selector 213. A write arbiter 306 implements this priority as a rule. When a write transaction is initiated, a next write transaction is only allowed when all data of the previous transaction has been sent. There is also a read arbiter 307 which transmits only read requests, but not the data associated with a read request. All data are sent to all readers, which use an individual transaction ID. Received data that are not compliant with the transaction ID of the reader are discarded. In this way reading data from the VRAM 207 is accelerated. In some embodiments in the connection between the write arbiter 306 and the read arbiter 307 bus converters 308 are interposed to accelerate data transmission between the arbiters 306, 307 and the VRAM 207.

In order to observe real-time performance and to support debugging, runtime statistics are generated in a statistics component 309.

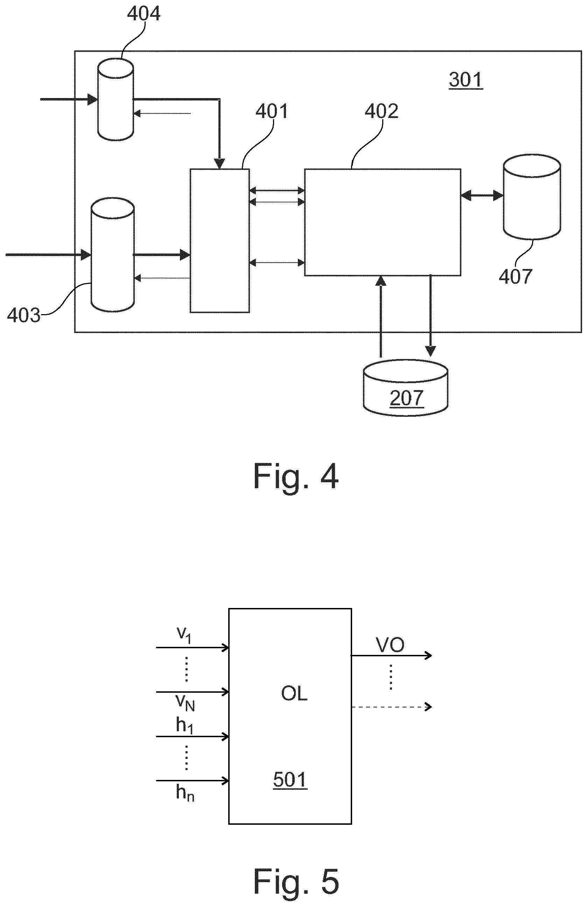

Figure 4 shows a more detailed block diagram of the shader 301 comprising as main components an execution unit 401 and a scratchpad 402. The execution unit 401 acts as a simple processing unit of the shader 301. The execution unit 401 fetches instructions from an applet memory 403 that contains all instructions for all applets. The instructions are combined as a set which forms one of the above-mentioned applets. The CPU 203 may load new applets into an applet memory 403 and uninstall applets from the applet memory 403. Multiple applets can be placed in the applet memory 403 enabling the shader 301 to execute a variety of drawing commands without occupying many resources of the FPGA 205 because the applets are loaded on an as needed basis. The same hardware can execute various drawing tasks instead of fixed function GPUs that permanently occupy FPGA resources.

The CPU 203 loads drawing commands (shader transactions) into a shader transaction memory 404. The decoded shader transactions are transferred to the execution unit 401 and contain a start address of the required applet and arguments for the applet to perform a drawing command requested by the CPU 203. The arguments comprise for instance color, width of a line, length of a line etc. The execution unit 401 is communicatively connected with a scratchpad 402 that functions as a cache memory for the execution unit 401. The execution unit 401 is also connected via the scratchpad 402 with the VRAM 207 allowing the shader 301 to read and write data from and to VRAM 207. In some embodiments the scratchpad 402 contains hardware accelerators to blend pixels and to read/write to the VRAM 207. As an option, the scratchpad 402 may be provided with additional memory 407 that can be a VRAM. It is noted that the graphical output (graphics) of the shader 301 is buffered on the FPGA 204 enabling playing out the graphics on an SDI or IP output. Many times, the applet contains simple instructions that can be executed in a single cycle. The FPGA runs for example at a clock rate of 300 MHz which permits to re-run the applet many times to draw multiple vertical audio bars (e.g. 16 audio bars) while a single video frame is displayed.

The application 209 generates drawing commands associated with the video frames not yet displayed. In this sense, the application 209 "runs into the future". The drawing commands are stored in the shader transaction memory 404 as shader transactions which are separated by a vertical sync signal enabling the shader 301 executing the drawing commands frame by frame.

Figure 5 illustrates a high-level block diagram of a portion of the FPGA 205 when it is integrated in the multiviewer device 100. The FPGA 205 includes an overlay block 501 that receives the heads h₁...hₙ from heads component 303 and input video streams v₁...v_{N} from from other FPGA-logic related to the actual multiviewer application. The overlay block 501 effects that the graphical output represented in the heads h₁...hₙ is overlaid with a video streams v₁...v_{N} to generate one or several video output signal(s) VO that is/are provided to a display device, e.g. monitor 101 and/or monitor 102. The overlay block 501 is configurable to adapt the number of video signal outputs VO to the number of display devices connected with the multiviewer device 100. It is noted that n, N are integers that may be the same but do not have to be the same.

Individual components or functionalities of the present invention are described in the embodiment examples as software or hardware solutions. However, this does not mean that a functionality described as a software solution cannot also be implemented in hard-ware and vice versa. Similarly, mixed solutions are also conceivable for a person skilled in the art, in which components and functionalities are simultaneously partially realized in software and hardware.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

**List of reference signs**

| | | | |
|---|---|---|---|
| 100 | multiviewer system | 311 | Frame |
| 101, 102 | monitors | 312 | Graphical element |
| 103, 104 | Window | 313 | Head |
| 106a,b | Time displays | 401 | Execution unit |
| 107 | Audio bar | 402 | Scratchpad |
| 108 | Tally light | 403 404 | Applet memory Shader transaction memory |
| 201 | software level | | |
| 202 | FPGA level | 406 | Shader transaction decoder |
| 203 | CPU | 407 | Additional memory |
| 204 | FPGA/GPU | 501 | Overlay block |
| 206 | PCI/PCIe bus | | |
| 207 | VRAM | | |
| 208 | PCI/PCIe bus | | |
| 209 | Application | | |
| 211 | GPU driver | | |
| 212-215 | Memory sections | | |
| 217 | Memory map component | | |
| 301 | Shader | | |
| 302 | Frame buffer manager | | |
| 303 | Heads component | | |
| 304 | Vsync component | | |
| 306 | Write arbiter | | |
| 307 | Read arbiter | | |
| 308 | Bus converges | | |
| 309 | Statistics component | | |

## Claims

1. FPGA for video processing including a graphical processing unit (204), wherein the FPGA comprises
- an interface (206) for receiving drawing commands,
- a VRAM (207) for storing video data,
- a shader device (301) configured to load a software applet into a working memory for executing the drawing commands, wherein the shader device (301) generates one or several graphical elements that are written into the VRAM (207),
- an output (303) for providing an output signal including at least one graphical element.

2. FPGA according to claim 1, wherein the FPGA is configured to additionally provide at the output (303) at least one video stream, wherein the at least one graphical element associated with the video stream(s).

3. FPGA according to claim 1 or 2, wherein the shader device (301) is configured to load several applets at the same time into the working memory, wherein the applets execute different drawing commands.

4. FPGA according to one of the preceding claims, wherein the FPGA is configured to operate at the clock rate that permits to execute applets multiple times within the duration of a single video frame.

5. FPGA according to one of the preceding claims, wherein the shader device (301) is configured to generate a graphical output at a drawing rate that is equal to or lower than a frame rate of a video stream associated with the graphical output.

6. FPGA according to one of the preceding claims, wherein the shader device comprises an execution unit (401) and a cache memory (402).

7. FPGA according to claim 6, wherein the execution unit (401) is coupled with an applet memory (403) storing multiple applets.

8. FPGA according to claim 7, wherein the applet memory (403) is configured to delete previously loaded applets and store new applets.

9. FPGA according to one of the preceding claims, wherein the execution unit (401) receives drawing instructions containing a start address and arguments for a specific applet stored in the applet memory (403).

10. FPGA according to one of the preceding claims, wherein the cache memory (402) of the shader device (301) reads from and the rights to the VRAM (207) to compensate latencies of the VRAM.

11. Video processing device (100) comprising an FPGA according to one of the preceding claims.

12. Multiviewer system (100) comprising a video processing device according to claim 11, wherein the processing device is communicatively connected with a monitor(101,102), wherein the processing device is configured to receive multiple input video streams and to execute an application (209) for generating a composed output video signal including at least several input video streams displayed on the monitor (101,102), and wherein the FPGA produces graphical output which is integrated in the composed output video signal.
